# EUROPEAN PATENT SPECIFICATION

(11) **EP 0 712 873 B1**
(45) Date of publication and mention of the grant of the patent: **03.02.1999**
(21) Application number: 95118156.9
(22) Date of filing: 17.11.1995
(51) Int. Cl.: C08F 220/28, C09D 133/14

(54) **Hydrophilic acrylic resins and waterborne coating composition containing same**
Hydrophile Acrylharze und diese enthaltende wässerige Beschichtungszusammensetzung
Résines acryliques hydrophiliques et composition de revêtement aqueuse les contenant

(30) Priority: 18.11.1994 JP 309770/94
(43) Date of publication of application: 22.05.1996
(73) Proprietor: Nippon Paint Co., Ltd., Kita-ku, Osaka-shi, Osaka 531 (JP)
(72) Inventor: Yamada, Shinya, Sakai-shi, Osaka-fu (JP); Nakano, Shinji, Takatsuki-shi, Osaka-fu (JP); Takagi, Takeshi, Yawata-shi, Kyoto-fu (JP)
(74) Representative: Riedl, Peter, Dr.

(56) References cited:
- EP-A- 0 423 565

## Description

### BACKGROUND OF THE INVENTION

This invention relates to a hydrophilic acrylic resin. It also relates to a coating composition containing the hydrophilic acrylic resin.

Much interest has been placed today on waterborne paint free from the emission of VOC for energy saving and environmental reasons. For use in thermosetting waterborne paint formulations, the vehicle resin must have a functional group such as hydroxyl as a crosslinking site thereof and also an acid group such as carboxylic or sulfonic acid group to render the resin water-soluble. In case of acrylic resins, the hydroxyl group may be introduced to the resin by copolymerizing a hydroxyl group-containing monomer such as 2-hydroxyethyl acrylate or methacrylate. The resins thus produced, however, are not fully satisfactory in their reactivity with a crosslinker such as melamine resins or blocked polyisocyanates because the cross-linking site thereof is not remotely spaced apart from the resin backbone chain formed of recurring carbon-to-carbon linkages and the curing with a crosslinker requires a relatively high temperature.

JP-A-61/181877 discloses coating compositions containing an acrylic resin produced by copolymerizing an adduct of 2-hydroxyethyl (meth)acrylate with ε-caprolactone known as PLACCEL FA and FM series with conventional monomers. This acrylic resin exhibits improved reactivity with the crosslinker and improved flexibility or low temperature-impact strength of the cured films. This is because the crosslinking site is farther spaced apart from the resin backbone by an ester linkage formed by the ring-opening reaction of ε -caprolactone. However, the above lactone-modified monomers are not compatible with an acid group-containing monomer necessary for rendering the resin water-soluble because the ester linkage is liable to hydrolysis and the copolymers containing the lactone-modified monomer and the acid group-containing monomer are not stable upon storage in an aqueous medium.

A need exists, therefore, for a hydrophilic acrylic resin which eliminates or ameliorates the above disadvantages when formulated in waterborne coating compositions as a vehicle resin thereof.

### SUMMARY OF THE INVENTION

In the first aspect, the present invention provides a hydrophilic acrylic copolymer having a hydroxyl number of from 20 to 300, an acid number of from 10 to 100 and a number average molecular weight of from 1,000 to 50,000, said copoymer containing in the molecule (a) a plurality of pendant groups each terminated with a group of the formula: 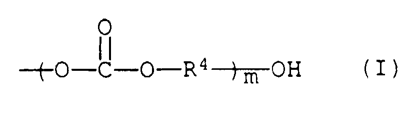 wherein R⁷ is a C₂-C₈-alkylene bridge, and m is an integer of from 1 to 6; and (b) a plurality of acid group-terminated pendant groups.

The above acrylic copolymer may be prepared by copolymerizing a monomer mixture of
(a) 10 to 60 % by weight of the mixture of an acrylic monomer of the formula II: 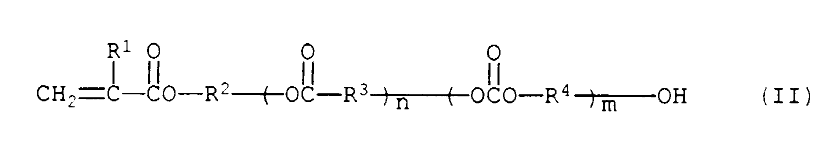 wherein R¹ is hydrogen or methyl, R² and R³ are independently a C₂-C₈ -alkylene bridge, n is zero or an integer of from 1 to 6, and R⁴ and m are as defined;
(b) 3 to 15 % by weight of the mixture of an ethylenically unsaturated monomer having an acid group; and
(c) the balance of the mixture of an ethylenically unsaturate monomer other than monomers (a) and (b).

In the second aspect, the present invention provides a hydrophilic acrylic copolymer having a hydroxyl number of from 20 to 300, an acid number of from 10 to 100 and a number average molecular weight of from 1,000 to 50,000, said copolymer containing in the molecule
(a) a plurality of pendant groups each terminate with a group of the formula: 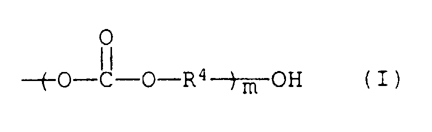 wherein R⁴ and m are as defined;
(b) a a plurality of acid group-terminated pendant groups; and
(c) a plurality of pendant groups each terminated with an amide group of the formula: 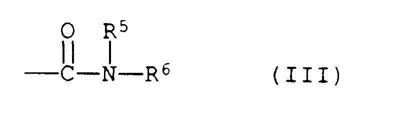 wherein R⁵ and R⁶ are independently hydrogen, a C₁-C₈ -alkyl, a C₆-C₁₂ -cycloalkyl or a C₆-C₁₂-aryl.

The acrylic copolymer just mentioned as above may be prepared by copolymerizing a monomer mixture of
(a) 10 to 60 % by weight of the mixture of an acrylic monomer of the formula II: 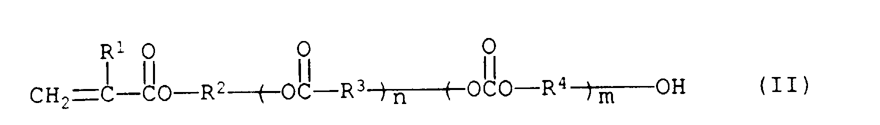 wherein all symbols are as defined;
(b) 3 to 15 % by weight of the mixture of an ethylenically unsaturate monomer having an acid group;
(c) 5 to 40 % by weight of the mixture of a monomer of the formula IV: 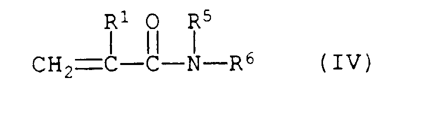 wherein R¹, R⁵ and R⁶ are as defined; and
(d) the balance of the mixture of an ethylenically unsaturated monomer other than monomers (a), (b) and (c).

In the third aspect, the present invention provides a waterborne, thermosetting coating composition comprising the hydrophilic acrylic copolymer of the present invention and crosslinker dispersed in an aqueous medium containing a neutralizing base.

### DETAILED DESCRIPTION OF THE INVENTION

The characteristic feature of the hydrophilic acrylic copolymer of the present invention resides in that it contains a plurality of pendant groups each terminated with a hydroxyalkyl carbonate group of the formula I: 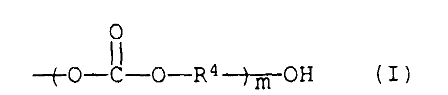 wherein R⁴ and m are as defined. This is particularly advantageous because each of the hydroxyl groups becoming a crosslinking site are spaced apart from the polymer backbone chain by a chemically stable alkylene carbonate linkage and, therefore, the copolymer is not liable to hydrolysis when formulated in a waterborne coating composition.

The'hydrophilic acrylic copolymer of the present invention is prepared by copolymerizing a monomer mixture of
(a) an acrylic monomer of the formula II: 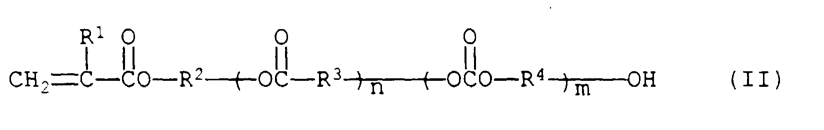 wherein all symbols are as defined;
(b) an ethylenically unsaturated monomer having an acid group; and
(c) an ethylenically unsaturated monomer other than monomers (a) and (b). The monomer mixture may optionally contain (d) an acrylamide or methacrylamide monomer of the formula: 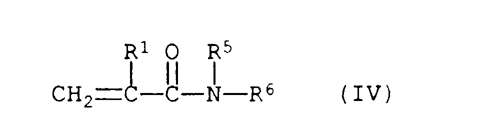 wherein R¹, R⁵ and R⁶ are as defined, as a portion of monomer (c).

The acrylic monomer having a hydroxyalkyl carbonate group of the formula II may be produced as disclosed in EP-A-0600417 by reacting a cyclic alkylenecarbonate with a hydroxylalkyl (meth)acrylate such as 2-hydroxyethyl methacrylate, 3-hydroxypropyl (meth)acrylate or 4-hydroxybutyl (meth)acrylate, or an adduct of hydroxyalkyl (meth)acrylate with a lactone such as addcuts of 2-hydroxyethyl (meth)acrylate with ε-caprolactone sold by Daicel Chemical Industries, Ltd. under the name of PLACCEL FA and FM series. The reaction may be carried out at a temperature from room temperature to 180 °C, preferably from room temperature to 80°C in the presence of a catalyst.

Preferably, said acrylic monomer (a) is an addition reaction product of a hydroxy-C₂-C₈-alkyl methacrylate with a cyclic C₂-C₈-alkylcarbonate or an addition reaction product of 2-hydroxyethyl (meth)acrylate-ε-caprolactone adduct with a cyclic C₂-C₈-alkylcarbonate. A preferred example of the cyclic carbonate is 5,5-dimethyl-1,3-dioxan-2-one otherwise called neopentyl glycol carbonate.

Preferably, the acid group-containing monomer (b) is a polymerizable alkenenoic acid, or a half ester or amide of an ethylenically unsaturated dicarboxylic acid.

Typical examples of carboxylic acid monomers are acrylic, methacrylic, crotonic or isocrotonic acid. Half esters of a dicarboxylic acid having an ethylenic unsaturation such as maleic, fumaric or itaconic acid with a low molecular weight aliphatic alcohol such as methanol, ethanol, n- or isopropanol, n-, iso- or t-butanol, methylcellosolve, ethylcellosolve, acetol, allyl alcohol or propargyl alcohol, and half amides of such unsaturated dicarboxylic acids such as itaconic acid monoanilide may also be used. Examples of sulfonic acid monomers include p-vinylbenzenesulfonic acid and 2-acryloylaminopropanesulfonic acid.
Examples of acrylamides and methacrylamides include (meth)acrylamide, N-monoalkyl or N,N-dialkyl derivatives thereof, such as acrylamide, methacrylamide, N,N-dimethylacrylamide, N,N-dimethylmethacrylamide, N,N-dibutylacrylamide, N,N-dibutylmethacrylamide, N,N-dioctylacrylamide, N,N-dioctylmethacrylamide, N-butylacrylamide, N-butylmethacrylamide, N-octylacrylamide or N-octylmethacrylamide, Copolymerization of these amide monomers improves the workability and also facilitates the pH control of the hydrophilic acrylic resin of the present invention.

The monomer mixture may optionally contain a small proportion of monomers such as 2-hydroxyethyl (meth)acrylate, 3-hydroxypropyl (meth)acrylate, 4-hydroxybutyl (meth)acrylate, or an adduct thereof with ε-caprolactone to introduce hydroxyl groups into the resin. Examples of other comonomers include styrene, α-methylstyrene, acrylic esters such as methyl acrylate, ethyl acrylate, butyl acrylate or 2-ethylhexyl acrylate, and methacrylic esters such as methyl methacrylate, ethyl methacrylate, butyl methacrylate, 2-methacrylate or lauryl methacrylate.

The proportion of hydroxyl group-containing monomers is from 10 to 60 %, preferably from 15 to 40 % by weight of the entire monomer mixture. With proportions less than this range the resin will not exhibit a curability sufficient to give a cured film having satisfactory water resistant and weatherability properties. Conversely, with proportions greater than the above range the resin will only give a cured film which is too rigid and brittle.

The proprotion of acid group-containing monomers is from 3 to 15 %, preferably from 5 to 13 % by weight of the entire monomer mixture. With proportions less than this range the resin will be poorly soluble in water and conversely greater proportions will result in decreased water resistance properties.

The proportion of amide monomers, if present, is from 5 to 40 %, preferably from 10 to 25 % by weight of the entire monomer mixture. Within this range various advantages as stated above may be expected. The balance of the monomer mixture is occupied with a comonomer or comonomers other than monomers having a functional group as identified above.

The monomer mixture may be polymerized using conventional solution polymerization methods. For example, the polymerization is preferably carried out in a solvent such as ethoxypropanol or γ -butyrolactone at a temperature from 80 °C to 140 °C in the presence of a polymerization initiator such as benzoyl peroxide, t-butyl hydroperoxide, t-butylperoxy 2-ethylhexanoate, cumene hydroperoxide or azobisisobutyronitrile.

The hydrophilic acrylic resin may also be produced by copolymerizing a hydroxyalkyl (meth)acrylate or its lactone adduct with other requisite monomers and then reacting the resulting copolymer with a cyclic carbonate such as 5,5-dimethyl-1,3-dioxan-2-one.

For use as a vehicle resin of waterborne coating compositions, the hydrophilic acrylic resin of the present invention should have an acid number of from 10 to 100, preferably from 30 to 80, and a hydroxyl number of from 20 to 300, preferably from 50 to 200 to impart the resin with optimum levels of water-solubility and curability as discussed before in connection with the proportions of acid group-bearing monomers and hydroxyl group-bearing monomers. The resin should also have a number average molecular weight of from 1,000 to 50,000, preferably from 1,500 to 30,000. This is because resins of low molecular weights result in decrease in strength properties of cured films and because excessively high molecular weights decrease the spray workability of the coating composition of the present invention.

The hydrophilic acrylic resin of the present invention is solubilized in water by neutralizing at least a portion of acid groups thereof with an amine such as mono-, di- or trimethylamine, mono-, di- or triethylamine, diisopropylamine, mono- or diethanolamine, or dimethylethanolamine.

The hydrophilic acrylic resin of the present invention is dissolved or dispersed in an aqueous medium containing a neutralizing base together with a crosslinker to prepare a thermosetting, waterborne coating composition. The crosslinker may be an aminoplast resin or a blocked polyisocyanate. Examples of aminoplast resins include di-, tri-, tetra-, penta- or hexamethylolmelamine; ethers thereof with a lower alkanol such as methanol, ethanol, propanol, isopropanol, butanol or isobutyl alcohol; ureaformaldehyde condensation products; and co-condensation product of melamine and urea with formaldehyde. Blocked polyisocyanates are prepared by reacting an organic polyisocyanate with a blocking agent as is well-known in the art. Examples of polyisocyanates include aliphatic or cycloaliphatic polyisocyanates such as trimethylenediisocyanate, hexamethylenediisocyanate(HMDI), isophoronediisocyanate(IPDI), dimers, trimers or trimethylolpropane adducts of these diisocyanates; and aromatic polyisocyanates such as phenylenediisocyanate, tolylenediisocyanate (TDI), naphthylenediisocyanate, diphenylmethanediisocyanate (MDI), triphenylmethanetriisocyanate, dimer or trimer of TDI. Examples of blocking agents include alcohols such as methanol or ethanol; secondary amines such as diethanolamine, lactams such as caprolactam; and oximes such as methyl ethyl ketoxime. Melamine resins are preferable including commercially available hydrophilic or hydrophobic melamine resins sold under the name of CYMEL® 303, CYMEL® 325 and CYMEL® 1156 by American Cyanamid Company, YUBAN 20N, YUBAN 20SB and YUBAN 129 sold by Mitsui Toatsu Chemicals, Inc.; and SUMIMAL M-50W, SUMIMAL M-4ON and SUMIMAL M-30W sold by Sumitomo Chemical Company Limited. The ratio of the acrylic resin to the crosslinker in the coating composition is generally from 90:10 to 50:50, preferably from 80:20 to 60:40 by weight as solids.

The waterborne coating composition of the present invention may contain, in addition to water, an organic solvent. Examples of organic solvents include alcohols such as methanol, ethanol, isopropanol, ethoxyethanol, ethoxypropanol or methoxypropanol; esters such as methyl acetate, ethyl acetate or butyl acetate; lactones such as γ -butyrolactone; hydrocarbons such as toluene or xylene; ethers such as dibutyl ether or ethylene glycol diethyl ether; and amides such N-methylpyrrolidone. The coating composition may contain other conventional additives such as inorganic, organic or metallic pigments e.g. aluminum flakes, UV absorbers, antifoaming agents and surface smoothers.

The following examples are given for illustrative purposes only. All parts and percents therein are by weight unless otherwise specified.

### Produciton Example 1

### Macromonomer A

A mixture of 2.88g (0.02 mol.) of 4-hydroxybutyl acrylate and 2.6g (0.02 mol.) of 5,5-dimethyl-1,3-dioxan-2-one was heated to make a solution. To this was added 0.038g (0.2 mmol.) of p-toluenesulfonic acid monohydrate. The mixture was heated at 40°C for 60 minutes with stirring. Thereafter the reaction mixture was cooled, filtered to remove solid matters and evaporated in vacuo to remove unreacted reactants.
¹H-NMR δ 0.8 (s, 6H, -C(CH₃)₂, 3.1 (s, 2H, -C(CH₃)₂-CH₂-OH), 3.8 (OCOOCH₂C(CH₃)₂-)
IR; ν 3450cm⁻¹ (OH), 1745cm ⁻¹ (O-CO-O), 1720cm⁻¹ (COO)

### Production Example 2

### Macromonomer B

A mixture of 2.6g (0.02 mol.) of 2-hydroxyethyl methacrylate and 2.6g (0.02 mol.) of 5,5-dimethyl-1,3-dioxan-2-one was heated to make a solution. To this was added 0.038g (0.02 mmol.) of p-toluenesulfonic acid monohydrate. The mixture was heated at 40°C for 60 minutes with stirring. Thereafter the reaction mixture was cooled, filtered to remove solid matters and evaporated in vacuo to remove unreacted reactants.
¹H-NMR δ 0.8 (s, 6H, -C(CH₃)₂, 3.1 (s, 2H, -C(CH₃)₂-CH₂-OH), 3.8 (OCOOCH₂C(CH₃)₂-)
IR; ν 3450cm ⁻¹ (OH), 1745cm ⁻¹ (O-CO-O), 1720cm⁻¹ (COO)

### Production Example 3

### Macromonomer C

A mixture of 2.88g (0.02 mol.) of 4-hydroxybutyl acrylate and 5.2g (0.04 mol.) of 5,5-dimethyl-1,3-dioxan-2-one was heated to make a solution. To this was added 0.93g of AMBERLIST 15. The mixture was heated at 40 °C for 200 minutes with stirring. After the reaction, the mixture was cooled, filtered to remove solid matters and evaporated in vacuo to remove unreacted reactants.
¹H-NMR δ 0.8 (s, 6H, -C(CH₃)₂, 3.1 (s, 2H, -C(CH₃)₂CH₂-OH), 3.8 (OCOOCH₂C(CH₃)₂-)
IR; ν 3450cm ⁻¹ (OH), 1745cm ⁻¹ (O-CO-O), 1720cm⁻¹ (COO)

### Example 1

A flask equipped with a stirrer, condenser, thermometer, nitrogen gas tube and drip funnel was charged with 500 parts of 2-ethoxypropanol and heated to 100°C. To this was added dropwise a mixture of 50 parts of styrene, 50 parts of methyl methacrylate, 200 parts of Macromonomer A, 120 parts of 2-ethylhexyl methacrylate, 380 parts of n-butyl acrylate, 40 parts of acrylic acid and 30 parts of azobisisobutyronitrile (AIBN) over 3 hours, followed by stirring at the same temperature for 30 minutes. Then a solution of 3 parts of t-butylperoxy 2-ethylhexanoate (TBPEH) in 50 parts of butyl acetate was added dropwise over 0.5 hours, followed by standing for 1.5 hours at 100 °C . Then the reaction mixture was evaporated in vacuo to remove 220 parts of solvent, and dissolved in a mixture of 99 parts of dimethylethanolamine and 570 parts of deionized water whereupon an aqueous varnish of acrylic resin having an acid number of 37 as solids, and a hydroxyl number of 49 as solids, and a number average molecular weight of 9500 (GPC method) was obtained.

The aqueous varnish was diluted with deionized water to a Ford cup #4 viscosity of 20 seconds, and stored at 40°C for 10 days. The storage stability of the varnish was evaluated by measuring the viscosity before and after storage. The results are shown in Table 1 below.

A waterborne coating composition was prepared by mixing 100 parts of the above varnish and 70 parts of YUBAN 20SB (melamine resin sold by Mitsui Toatsu Chemicals, Inc.) and diluting with deionized water to a Ford cup #4 viscosity of 20 seconds.

This coating composition was applied on a tinplate, baked at 140 °C for 20 minutes and tested for curability. The coating composition was also tested for storage stability under the same conditions as before. The results are also shown in Table 1.

In the following Examples, the procedure of Example 1 was followed to prepare an aqueous resin varnish and a waterborne coating composition using various materials shown therein. The results of storage stability and curability tests carried out under the same conditions as in Example 1 are shown in Table 1.

### Example 2

| Solvent | |
|---|---|
| 2-Ethoxypropanol | 500 parts |

| Monomer mixture | |
|---|---|
| Macromonomer A | 280 parts |
| Monomethyl itaconate | 80 parts |
| Methyl methacrylate | 200 parts |
| Butyl acrylate | 200 parts |
| 2-Ethylhexyl methacrylate | 200 parts |

| Initiator | |
|---|---|
| AIBN (1st stage) | 30 parts |
| TBPEH (2nd stage) | 3 parts |
| Solvent removed | 220 parts |

| Neutralizer | |
|---|---|
| Dimethylethanolamine | 100 parts |
| Deionized water | 570 parts |

| Varnish properties | |
|---|---|
| Appearance | clear |
| Acid number | 30 |
| OH number | 55 |
| Mn | 11000 |

### Example 3

| Solvent | |
|---|---|
| 2-Ethoxypropanol | 500 parts |

| Monomer mixture | |
|---|---|
| Macromonomer B | 280 parts |
| Monomethyl itaconate | 120 parts |
| Styrene | 100 parts |
| Methyl methacrylate | 100 parts |
| Butyl acrylate | 120 parts |
| 2-Ethylhexyl methacrylate | 240 parts |

| Initiator | |
|---|---|
| AIBN (1st stage) | 30 parts |
| TBPEH (2nd stage) | 3 parts |
| Solvent removed | 220 parts |

| Neutralizer | |
|---|---|
| Dimethylethanolamine | 100 parts |
| Deionized water | 570 parts |

| Varnish properties | |
|---|---|
| Appearance | clear |
| Acid number | 30 |
| OH number | 63 |
| Mn | 11000 |

### Example 4

| Solvent | |
|---|---|
| 2-Ethoxypropanol | 500 parts |

| Monomer mixture | |
|---|---|
| Macromonomer C | 280 parts |
| Monobutyl maleate | 35 parts |
| Styrene | 50 parts |
| Methyl methacrylate | 190 parts |
| Butyl acrylate | 100 parts |
| 2-Ethylhexyl methacrylate | 180 parts |

| Initiator | |
|---|---|
| AIBN (1st stage) | 30 parts |
| TBPEH (2nd stage) | 3 parts |
| Solvent removed | 220 parts |

| Neutralizer | |
|---|---|
| Dimethylethanolamine | 70 parts |
| Deionized water | 570 parts |

| Varnish properties | |
|---|---|
| Appearance | clear |
| Acid number | 13 |
| OH number | 51 |
| Mn | 12000 |

### Example 5

| Solvent | |
|---|---|
| 2-Ethoxypropanol | 500 parts |

| Monomer mixture | |
|---|---|
| Macromonomer A | 500 parts |
| Methacrylic acid | 30 parts |
| Monobutyl maleate | 60 parts |
| Styrene | 50 parts |
| Methyl methacrylate | 175 parts |
| Butyl acrylate | 125 parts |
| 2-Ethylhexyl methacrylate | 160 parts |

| Initiator | |
|---|---|
| AIBN (1st stage) | 20 parts |
| TBPEH (2nd stage) | 3 parts |
| Solvent removed | 220 parts |

| Neutralizer | |
|---|---|
| Dimethylethanolamine | 80 parts |
| Deionized water | 570 parts |

| Varnish properties | |
|---|---|
| Appearance | clear |
| Acid number | 39 |
| OH number | 82 |
| Mn | 17000 |

### Example 6

| Solvent | |
|---|---|
| Ethylene glycol monobutyl ether | 500 parts |

| Monomer mixture | |
|---|---|
| Macromonomer A | 400 parts |
| Methacrylic acid | 30 parts |
| Monobutyl maleate | 100 parts |
| Styrene | 50 parts |
| Methyl methacrylate | 150 parts |
| Butyl acrylate | 150 parts |
| 2-Ethylhexyl methacrylate | 120 parts |

| Initiator | |
|---|---|
| AIBN (1st stage) | 20 parts |
| TBPEH (2nd stage) | 3 parts |
| Solvent removed | 220 parts |

| Neutralizer | |
|---|---|
| Dimethylethanolamine | 100 parts |
| Deionized water | 570 parts |

| Varnish properties | |
|---|---|
| Appearance | clear |
| Acid number | 39 |
| OH number | 82 |
| Mn | 18000 |

### Example 7

| Solvent | |
|---|---|
| Ethylene glycol monobutyl ether | 500 parts |

| Monomer mixture | |
|---|---|
| Macromonomer C | 360 parts |
| Methacrylic acid | 20 parts |
| Monomethyl itaconate | 100 parts |
| Styrene | 160 parts |
| Methyl methacrylate | 50 parts |
| Butyl acrylate | 150 parts |
| 2-Ethylhexyl methacrylate | 160 parts |

| Initiator | |
|---|---|
| AIBN (1st stage) | 50 parts |
| TBPEH (2nd stage) | 3 parts |
| Solvent removed | 300 parts |

| Neutralizer | |
|---|---|
| Triethylamine | 80 parts |
| Deionized water | 650 parts |

| Varnish properties | |
|---|---|
| Appearance | clear |
| Acid number | 52 |
| OH number | 50 |
| Mn | 7000 |

### Example 8

| Solvent | |
|---|---|
| Ethylene glycol monobutyl ether | 500 parts |

| Monomer mixture | |
|---|---|
| Macromonomer B | 600 parts |
| Methacrylic acid | 20 parts |
| Monobutyl itaconate | 100 parts |
| Styrene | 70 parts |
| Butyl acrylate | 150 parts |
| 2-Ethylhexyl methacrylate | 60 parts |

| Initiator | |
|---|---|
| TBPEH (1st stage) | 50 parts |
| TBPEH (2nd stage) | 3 parts |
| Solvent removed | 300 parts |

| Neutralizer | |
|---|---|
| Triethylamine | 80 parts |
| Deionized water | 650 parts |

| Varnish properties | |
|---|---|
| Appearance | clear |
| Acid number | 45 |
| OH number | 129 |
| Mn | 8000 |

### Comparative Example 1

Example 8 was repeated except that 600 parts of PLACCEL FM 1 (2-hydroxyethyl methacrylate-caprolactone adduct sold by Daicel Chemical Industries, Ltd.) were replaced for 600 parts of Macromonomer B. Acid number 45, OH number 138, and Mn 7,000.

### Comparative Example 2

Example 1 was repeated except that 280 parts of PLACCEL FM 1 were replaced for 280 parts of Macromonomer A. Acid number 30, OH number 62, and Mn 11,000.

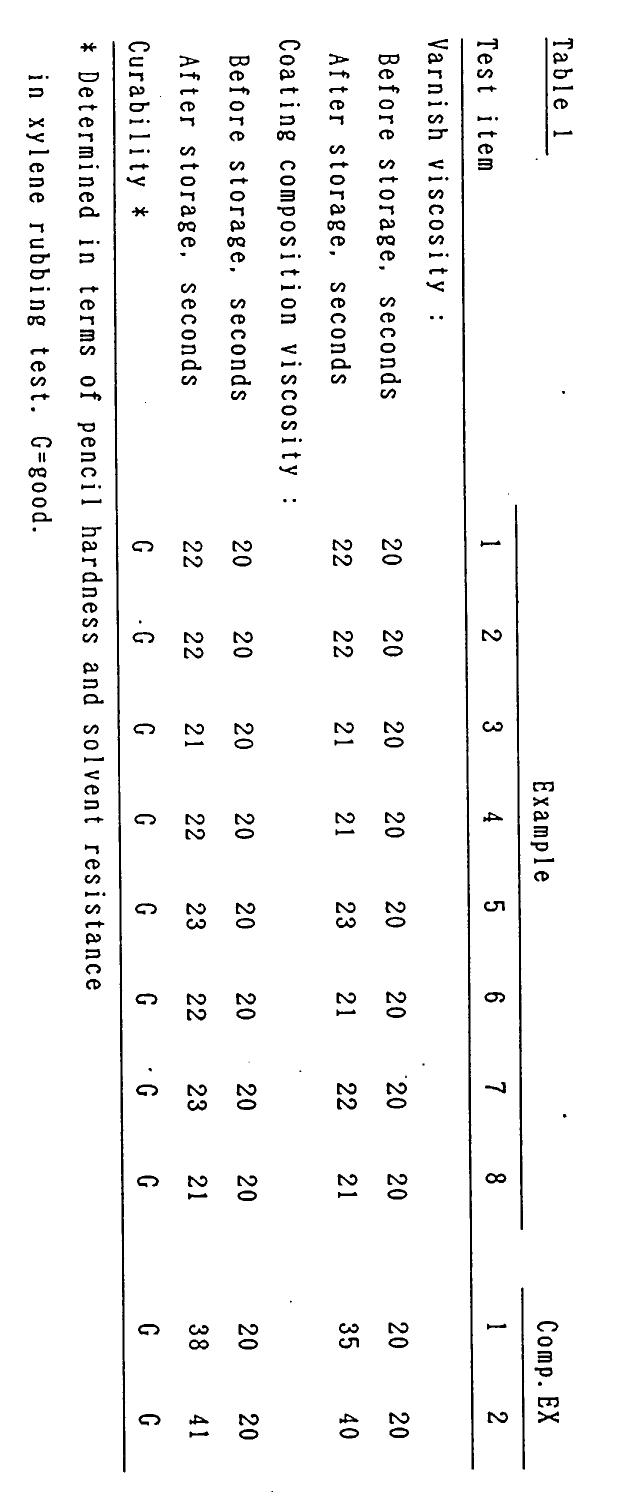

### Example 9

A flask equipped with a stirrer, condenser, thermometer, nitrogen gas tube and drip funnel was charged with 500 parts of 2-ethoxypropanol and heated to 100°C. To this was added dropwise the following monomer and initiator mixture over 3 hours followed by stirring for 30 minutes.

| | |
|---|---|
| Styrene | 25 parts |
| Methyl methacrylate | 25 parts |
| Macromonomer A | 400 parts |
| 2-Ethylhexyl methacrylate | 70 parts |
| Butyl acrylate | 280 parts |
| Monobutyl maleate (in methanol) | 100 parts |
| Acrylamide (in methanol) | 100 parts |
| Methanol | 300 parts |
| AIBN | 30 parts |

Then a solution of 3 parts of TBPEH in 50 parts of butyl acetate was added dropwise over 30 minutes, followed by maintaining the mixture at 100°C for 1.5 hours while distilling off 300 parts of methanol. Then the reaction mixture was evaporated in vacuo to remove 220 parts of solvent, and dissolved in a mixture of 100 parts of dimethylethanolamine and 570 parts of deionized water whereupon an aqueous varnish of acrylic resin having an acid number of 33 as solids, and a hydroxyl number of 82 as solids, and a number average molecular weight of 12,000 (GPC method) was obtained.

The aqueous varnish was diluted with deionized water to a Ford cup #4 viscosity of 20 seconds, and stored at 40°C for 10 days. The storage stability of the varnish was evaluated by measuring the viscosity before and after storage. The results are shown in Table 2 below.

A waterborne coating composition was prepared by mixing 100 parts of the above varnish and 70 parts of YUBAN 20SB (melamine resin sold by Mitsui Toatsu Chemicals, Inc.) and diluting with deionized water to a Ford cup #4 viscosity of 20 seconds.

This coating composition was applied on a tinplate, baked at 140 °C for 20 minutes and tested for curability. The coating composition was also tested for storage stability under the same conditions as before. The results are also shown in Table 2.

In the following Examples, the procedure of Example 9 was followed to prepare an aqueous resin varnish and a waterborne coating composition using various materials shown therein. The results of storage stability and curability tests carried out under the same conditions as in Example 9 are shown in Table 2.

### Example 10

| Solvent | |
|---|---|
| 2-Ethoxypropanol | 500 parts |

| Monomer mixture | |
|---|---|
| Macromonomer A | 280 parts |
| Monomethyl itaconate | 80 parts |
| Acrylamide | 100 parts |
| Methyl methacrylate | 200 parts |
| Butyl acrylate | 200 parts |
| 2-Ethylhexyl methacrylate | 200 parts |
| Methanol | 300 parts |

| Initiator | |
|---|---|
| AIBN (1st stage) | 30 parts |
| TBPEH (2nd stage) | 3 parts |
| Methanol removed | 300 parts |
| Solvent removed | 220 parts |

| Neutralizer | |
|---|---|
| Dimethylethanolamine | 100 parts |
| Deionized water | 570 parts |

| Varnish properties | |
|---|---|
| Appearance | clear |
| Acid number | 31 |
| OH number | 57 |
| % Amide monomer | 10 |
| Mn | 12,000 |

### Example 11

| Solvent | |
|---|---|
| 2-Ethoxypropanol | 500 parts |

| Monomer mixture | |
|---|---|
| Macromonomer B | 280 parts |
| Monomethyl itaconate | 120 parts |
| Acrylamide | 100 parts |
| Styrene | 100 parts |
| Methyl methacrylate | 100 parts |
| Butyl acrylate | 120 parts |
| 2-Ethylhexyl methacrylate | 240 parts |
| Methanol | 500 parts |

| Initiator | |
|---|---|
| AIBN (1st stage) | 30 parts |
| TBPEH (2nd stage) | 3 parts |
| Methanol removed | 500 parts |
| Solvent removed | 220 parts |

| Neutralizer | |
|---|---|
| Dimethylethanolamine | 100 parts |
| Deionized water | 570 parts |

| Varnish properties | |
|---|---|
| Appearance | clear |
| Acid number | 49 |
| OH number | 63 |
| % Amide monomer | 10 |
| Mn | 12,000 |

### Example 12

| Solvent | |
|---|---|
| 2-Ethoxypropanol | 500 parts |

| Monomer mixture | |
|---|---|
| Macromonomer C | 280 parts |
| Monobutyl maleate | 35 parts |
| Acrylamide | 120 parts |
| Styrene | 50 parts |
| Methyl methacrylate | 190 parts |
| Butyl acrylate | 100 parts |
| 2-Ethylhexyl methacrylate | 180 parts |
| Methanol | 300 parts |

| Initiator | |
|---|---|
| AIBN (1st stage) | 30 parts |
| TBPEH (2nd stage) | 3 parts |
| Methanol removed | 300 parts |
| Solvent removed | 220 parts |

| Neutralizer | |
|---|---|
| Dimethylethanolamine | 70 parts |
| Deionized water | 570 parts |

| Varnish properties | |
|---|---|
| Appearance | clear |
| Acid number | 13 |
| OH number | 51 |
| % Amide monomer | 14 |
| Mn | 11,000 |

### Example 13

| Solvent | |
|---|---|
| 2-Ethoxypropanol | 500 parts |

| Monomer mixture | |
|---|---|
| Macromonomer A | 500 parts |
| Methacrylic acid | 30 parts |
| Monobutyl maleate | 60 parts |
| Acrylamide | 125 parts |
| Styrene | 50 parts |
| Methyl methacrylate | 175 parts |
| Butyl acrylate | 125 parts |
| 2-Ethylhexyl methacrylate | 160 parts |
| Methanol | 300 parts |

| Initiator | |
|---|---|
| AIBN (1st stage) | 20 parts |
| TBPEH (2nd stage) | 3 parts |
| Methanol removed | 300 parts |
| Solvent removed | 220 parts |

| Neutralizer | |
|---|---|
| Dimethylethanolamine | 80 parts |
| Deionized water | 570 parts |

| Varnish properties | |
|---|---|
| Appearance | clear |
| Acid number | 40 |
| OH number | 80 |
| % Amide monomer | 14 |
| Mn | 18,000 |

### Example 14

| Solvent | |
|---|---|
| Ethylene glycol monobutyl ether | 500 parts |

| Monomer mixture | |
|---|---|
| Macromonomer A | 400 parts |
| Methacrylic acid | 30 parts |
| Monobutyl maleate | 100 parts |
| t-Butyl acrylamide | 150 parts |
| Styrene | 50 parts |
| Methyl methacrylate | 150 parts |
| Butyl acrylate | 150 parts |
| 2-Ethylhexyl methacrylate | 120 parts |
| Methanol | 400 parts |

| Initiator | |
|---|---|
| AIBN (1st stage) | 20 parts |
| TBPEH (2nd stage) | 3 parts |
| Methanol removed | 400 parts |
| Solvent removed | 220 parts |

| Neutralizer | |
|---|---|
| Dimethylethanolamine | 100 parts |
| Deionized water | 570 parts |

| Varnish properties | |
|---|---|
| Appearance | clear |
| Acid number | 52 |
| OH number | 82 |
| % Amide monomer | 15 |
| Mn | 17,000 |

### Example 15

| Solvent | |
|---|---|
| Ethylene glycol monobutyl ether | 500 parts |

| Monomer mixture | |
|---|---|
| Macromonomer C | 360 parts |
| Methacrylic acid | 20 parts |
| Monomethyl itaconate | 100 parts |
| Methacrylamide | 100 parts |
| Styrene | 160 parts |
| Methyl methacrylate | 50 parts |
| Butyl acrylate | 150 parts |
| 2-Ethylhexyl methacrylate | 160 parts |
| Methanol | 500 parts |

| Initiator | |
|---|---|
| TBPEH (1st stage) | 50 parts |
| TBPEH (2nd stage) | 3 parts |
| Methanol removed | 500 parts |
| Solvent removed | 300 parts |

| Neutralizer | |
|---|---|
| Triethylamine | 80 parts |
| Deionized water | 650 parts |

| Varnish properties | |
|---|---|
| Appearance | clear |
| Acid number | 52 |
| OH number | 50 |
| % Amide monomer | 10 |
| Mn | 8,000 |

### Example 16

| Solvent | |
|---|---|
| Ethylene glycol monobutyl ether | 500 parts |

| Monomer mixture | |
|---|---|
| Macromonomer B | 600 parts |
| Methacrylic acid | 20 parts |
| Mononutyl itaconate | 100 parts |
| Acrylamide | 200 parts |
| Styrene | 70 parts |
| Butyl acrylate | 150 parts |
| 2-Ethylhexyl methacrylate | 60 parts |
| Methanol | 500 parts |

| Initiator | |
|---|---|
| TBPEH (1st stage) | 50 parts |
| TBPEH (2nd stage) | 3 parts |
| Methanol removed | 500 parts |
| Solvent removed | 300 parts |

| Neutralizer | |
|---|---|
| Triethylamine | 80 parts |
| Deionized water | 650 parts |

| Varnish properties | |
|---|---|
| Appearance | clear |
| Acid number | 43 |
| OH number | 131 |
| % Amide monomer | 20 |
| Mn | 8,000 |

### Example 17

| Solvent | |
|---|---|
| Ethylene glycol monobutyl ether | 500 parts |

| Monomer mixture | |
|---|---|
| Macromonomer A | 510 parts |
| Methacrylic acid | 30 parts |
| N,N-dimethylaminoethyl monoitaconate | 100 parts |
| Methacrylamide | 150 parts |
| Methyl methacrylate | 100 parts |
| Butyl acrylate | 50 parts |
| 2-Ethylhexyl methacrylate | 60 parts |
| Methanol | 500 parts |

| Initiator | |
|---|---|
| TBPEH (1st stage) | 40 parts |
| TBPEH (2nd stage) | 3 parts |
| Methanol removed | 500 parts |
| Solvent removed | 300 parts |

| Neutralizer | |
|---|---|
| Triethylamine | 60 parts |
| Deionized water | 570 parts |

| Varnish properties | |
|---|---|
| Appearance | clear |
| Acid number | 45 |
| OH number | 104 |
| % Amide monomer | 15 |
| Mn | 10,000 |

### Example 18

| Solvent | |
|---|---|
| Ethylene glycol monobutyl ether | 500 parts |

| Monomer mixture | |
|---|---|
| Macromonomer A | 320 parts |
| Methacrylic acid | 20 parts |
| Itaconic acid monoanilide | 100 parts |
| Acrylamide | 200 parts |
| Styrene | 50 parts |
| Methyl methacrylate | 90 parts |
| Butyl acrylate | 100 parts |
| 2-Ethylhexyl methacrylate | 120 parts |
| Methanol | 500 parts |

| Initiator | |
|---|---|
| TBPEH (1st stage) | 20 parts |
| TBPEH (2nd stage) | 3 parts |
| Methanol removed | 500 parts |
| Solvent removed | 220 parts |

| Neutralizer | |
|---|---|
| Triethylamine | 80 parts |
| Deionized water | 570 parts |

| Varnish properties | |
|---|---|
| Appearance | clear |
| Acid number | 38 |
| OH number | 66 |
| % Amide monomer | 30 |
| Mn | 19,000 |

### Comparative Example 3

Example 11 was repeated except that 280 parts of PLACCEL FM1 were replaced for 280 parts of Macromonomer B. Acid number 49, OH number 67, % amide monomer 10 %, and Mn=12,000.

### Comparative Example 4

| Solvent | |
|---|---|
| 2-Ethoxypropanol | 500 parts |

| Monomer mixture | |
|---|---|
| PLACCEL FM1 | 600 parts |
| Methacrylic acid | 20 parts |
| Monomethyl itaconate | 100 parts |
| Acrylamide | 200 parts |
| Methyl methacrylate | 100 parts |
| Butyl acrylate | 100 parts |
| 2-Ethylhexyl methacrylate | 160 parts |
| Methanol | 500 parts |

| Initiator | |
|---|---|
| TBPEH (1st stage) | 50 parts |
| TBPEH (2nd stage) | 3 parts |
| Methanol removed | 500 parts |
| Solvent removed | 220 parts |

| Neutralizer | |
|---|---|
| Dimethylethanolamine | 100 parts |
| Deionized water | 570 parts |

| Varnish properties | |
|---|---|
| Appearance | clear |
| Acid number | 41 |
| OH number | 108 |
| % Amide monomer | 16 |
| Mn | 8,000 |

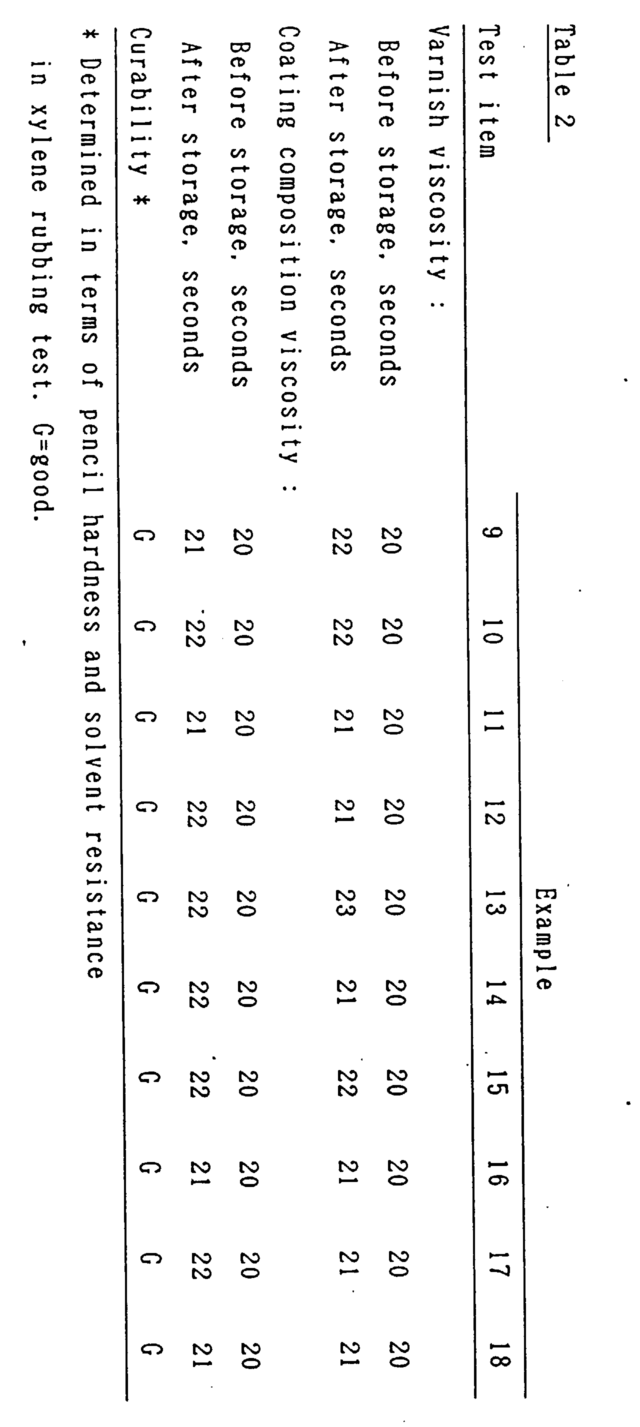

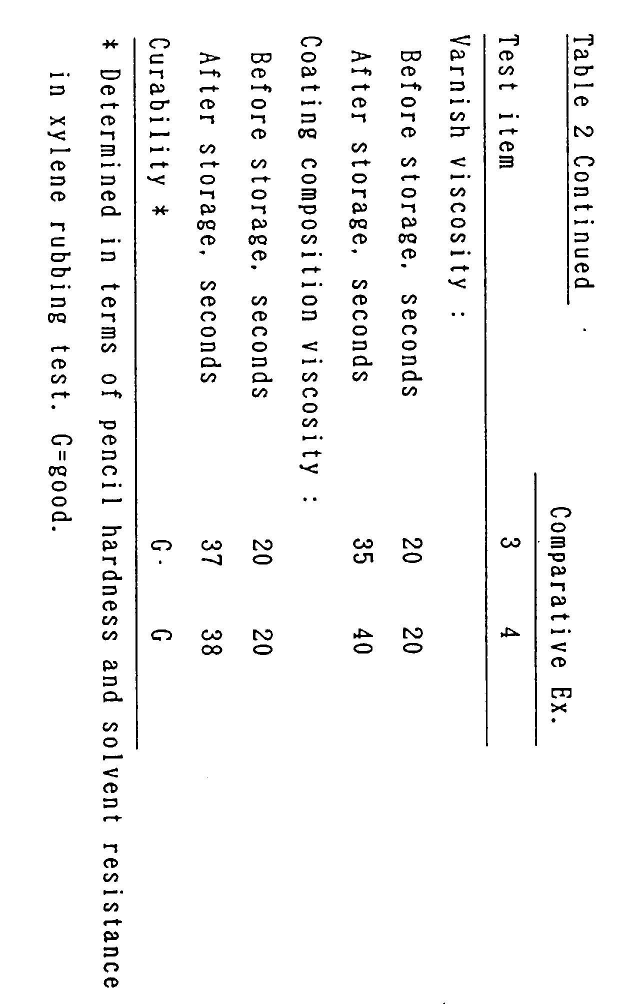

## Claims

1. A hydrophilic acrylic copolymer having a hydroxyl number of from 20 to 300, an acid number of from 10 to 100 and a number average molecular weight of from 1,000 to 50,000, said copolymer bearing in the molecule (a) a plurality of pendant groups each terminated with a unit of the formula: 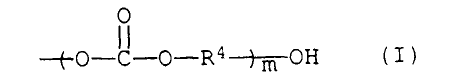 wherein R⁴ is a C₂-C₈ -alkylene bridge, and m is an integer of from 1 to 6; and (b) a plurality of acid group-terminated pendant groups.

2. The hydrophilic acrylic copolymer according to claim 1, wherein said hydroxyl number, said acid number and said molecular weight are from 50 to 200, from 30 to 80 and from 1,500 to 30,000, respectively.

3. The hydrophilic acrylic copolymer according to claim 1 produced by copolymerizing a mixture of:
(a) 10 to 60 % by weight of the mixture of an acrylic monomer of the formula: 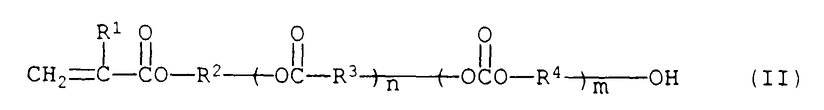 wherein R¹ is hydrogen or methyl, R² and R³ are independently a C₂-C₈-alkylene bridge, n is zero or an integer of from 1 to 6, and R⁴ and m are as defined;
(b) 3 to 15 % by weight of the mixture of an ethylenically unsaturated monomer having an acid group; and
(c) the balance of the mixture of an ethylenically unsaturated monomer other than monomers (a) and (b).

4. The hydrophilic acrylic copolymer according to claim 3, wherein said acrylic monomer (a) is an addition reaction product of a hydroxy-C₂-C₈-alkyl methacrylate with a cyclic C₂-C₈ -alkylcarbonate.

5. The hydrophilic acrylic copolymer according to claim 4, wherein said cyclic alkylcarbonate is 5,5-dimethyl-1,3-dioxan-2-one.

6. The hydrophilic acrylic copolymer according to claim 3, wherein said acrylic monomer (a) is an addition reaction product of 2-hydroxyethyl (meth)acrylate-ε-caprolactone adduct with a cyclic C₂-C₈-alkylcarbonate.

7. The hydrophilic acrylic copolymer according to claim 6, wherein said cyclic alkylcarbonate is 5,5-dimethyl-1,3-dioxan-2-one.

8. The hydrophilic acrylic copolymer according to claim 3, wherein said acid group-containing monomer (b) is an polymerizable alkenenoic acid, or a half ester or amide of an ethylenically unsaturated dicarboxylic acid.

9. A hydrophilic acrylic copolymer having a hydroxyl number of from 20 to 300, an acid number of from 10 to 100 and a number average molecular weight of from 1,000 to 50,000, said copolymer bearing in the molecule (a) a plurality of pendant groups each terminated with a unit of the formula: 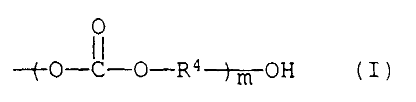 wherein R⁴ is a C₂-C₈ -alkylene bridge, and m is an integer of from 1 to 6; (b) a plurality of acid group-terminated pendant groups; and (c) a plurality of pendant groups each terminated with an amide group of the formula: 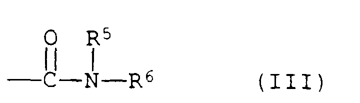 wherein and R⁵ and R⁶ are independently hydrogen, a C₁-C₈-alkyl, a C₆-C₁₂-cycloalkyl or a C₆-C₁₂-aryl.

10. The hydrophilic acrylic copolymer according to claim 9, wherein said hydroxyl number, said acid number and said molecular weight are from 50 to 200, from 30 to 80 and from 1,500 to 30,000, respectively.

11. The hydrophilic acrylic copolymer according to claim 9 produced by copolymerizing a mixture of:
(a) 10 to 60 % by weight of the mixture of an acrylic monomer of the formula: 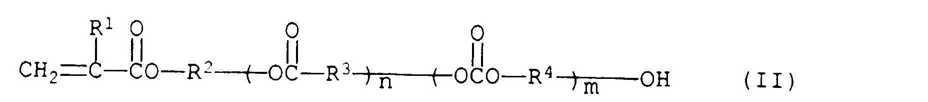 wherein R¹ is hydrogen or methyl, R² and R³ are independently a C₂-C₈-alkylene bridge, n is zero or an integer of from 1 to 6, and R⁴ and m are as defined;
(b) 3 to 15 % by weight of the mixture of an ethylenically unsaturated monomer having an acid group;
(c) 5 to 40 % by weight of the mixture of a monomer of the formula: 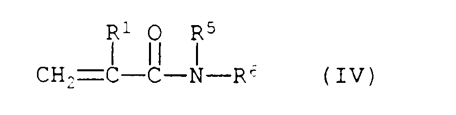 wherein R¹, R⁵ and R⁶ are as defined, and
(d) the balance of the mixture of an ethylenically unsaturated monomer other than monomers (a), (b) and (c).

12. The hydrophilic acrylic copolymer according to claim 11, wherein said acrylic monomer (a) is an addition reaction product of a hydroxy-C₂-C₈-alkyl methacrylate with a cyclic C₂-C₈-alkylcarbonate.

13. The hydrophilic acrylic copolymer according to claim 12, wherein said cyclic alkylcarbonate is 5,5-dimethyl-1,3-dioxan-2-one.

14. The hydrophilic acrylic copolymer according to claim 10, wherein said acrylic monomer (a) is an addition reaction product of 2-hydroxyethyl (meth)acrylate-ε-caprolactone adduct with a cyclic C₂-C₈-alkylcarbonate

15. The hydrophilic acrylic copolymer according to claim 14, wherein said cyclic alkylcarbonate is 5,5-dimethyl-1,3-dioxan-2-one.

16. The hydrophilic acrylic copolymer according to claim 10, wherein said acid group-containing monomer (b) is an polymerizable alkenenoic acid, or a half ester or amide of an ethylenically unsaturated dicarboxylic acid.

17. The hydrophilic acrylic copolymer according to claim 10, wherein said monomer (c) is (meth)acrylamide, N-monoalkyl or N,N-dialkyl derivative thereof.

18. A thermosetting waterborne coating composition comprising the hydrophilic acrylic copolymer of claim 1 and a crosslinker dispersed in an aqueous medium containing a neutralizing base.

19. The coating composition according to claim 18, wherein said crosslinker is a melamine resin.

20. The coating composition according to claim 18, wherein said crosslinker is a blocked polyisocyanate.

21. A thermosetting waterborne coating composition comprising the hydrophilic acrylic copolymer of claim 9 and a crosslinker dispersed in an aqueous medium containing a neutralizing base.

22. The coating composition according to claim 21 wherein said crosslinker is a melamine resin.

23. The coating composition according to claim 21, wherein said crosslinker is a blocked polyisocyanate.

## Patentansprüche

1. Hydrophiles Acrylcopolymer mit einer Hydroxylzahl von 20 bis 300, einer Säurezahl von 10 bis 100 und einem zahlenmittleren Molekulargewicht von 1.000 bis 50.000, wobei das Copolymer in dem Molekül (a) mehrere Seitengruppen mit einer endständigen Einheit der Formel: 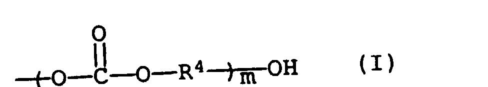 worin R⁴ für eine C₂-C₈-Alkylenbrücke steht und m für eine ganze Zahl von 1 bis 6 steht; und (b) mehrere Seitengruppen mit endständigen Säuregruppen aufweist.

2. Hydrophiles Acrylcopolymer nach Anspruch 1, worin die Hydroxylzahl, die Säurezahl und das Molekulargewicht 50 bis 200, 30 bis 80 bzw. 1.500 bis 30.000 betragen.

3. Hydrophiles Acrylcopolymer nach Anspruch 1, hergestellt durch Copolymerisation eines Gemisches aus:
(a) auf das Gewicht des Gemisches bezogenen 10 bis 60% eines Acrylmonomers der Formel: 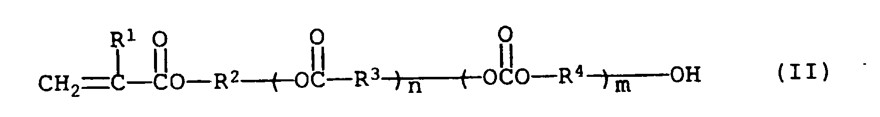 worin R¹ für Wasserstoff oder Methyl steht, R² und R³ unabhängig voneinander für eine C₂-C₈-Alkylenbrücke stehen, n für null oder eine ganze Zahl von 1 bis 6 steht, und R⁴ und m wie definiert sind;
(b) auf das Gewicht des Gemisches bezogenen 3 bis 15% eines ethylenisch ungesättigten Monomers mit einer Säuregruppe; und
(c) einem von den Monomeren (a) und (b) verschiedenen, ethylenisch ungesättigten Monomer als Rest des Gemisches.

4. Hydrophiles Acrylcopolymer nach Anspruch 3, worin das Acrylmonomer (a) ein Additionsreaktionsprodukt eines Hydroxy-C₂-C₈-alkylmethacrylats mit einem cyclischen C₂-C₈-Alkylcarbonat ist.

5. Hydrophiles Acrylcopolymer nach Anspruch 4, worin das cyclische Alkylcarbonat 5,5-Dimethyl-1,3-dioxan-2-on ist.

6. Hydrophiles Acrylcopolymer nach Anspruch 3, worin das Acrylmonomer (a) ein Additionsreaktionsprodukt von 2-Hydroxyethyl(meth)acrylat-ε-caprolacton-Addukt mit einem cyclischen C₂-C₈-Alkylcarbonat ist.

7. Hydrophiles Acrylcopolymer nach Anspruch 6, worin das cyclische Alkylcarbonat 5,5-Dimethyl-1,3-dioxan-2-on ist.

8. Hydrophiles Acrylcopolymer nach Anspruch 3, worin das Säuregruppen enthaltende Monomer (b) eine polymerisierbare Alkensäure, oder ein Halbester oder -amid einer ethylenisch ungesättigten Dicarbonsäure ist.

9. Hydrophiles Acrylcopolymer mit einer Hydroxylzahl von 20 bis 300, einer Säurezahl von 10 bis 100 und einem zahlenmittleren Molekulargewicht von 1.000 bis 50.000, wobei das Copolymer in dem Molekül (a) mehrere Seitengruppen mit einer endständigen Einheit der Formel: 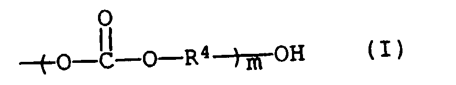 worin R⁴ für eine C₂-C₈-Alkylenbrücke steht und m für eine ganze Zahl von 1 bis 6 steht; (b) mehrere Seitengruppen mit endständigen Säuregruppen; und (c) mehrere Seitengruppen mit einer endständigen Amidgruppe der Formel: 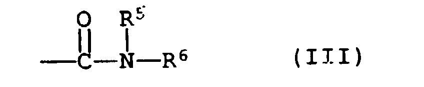 worin R⁵ und R⁶ unabhängig voneinander für Wasserstoff, C₁-C₈-Alkyl, C₆-C₁₂-Cycloalkyl oder C₆-C₁₂-Aryl stehen, aufweist.

10. Hydrophiles Acrylcopolymer nach Anspruch 9, worin die Hydroxylzahl, die Säurezahl und das Molekulargewicht 50 bis 200, 30 bis 80 bzw. 1.500 bis 30.000 betragen.

11. Hydrophiles Acrylcopolymer nach Anspruch 9, hergestellt durch Copolymerisation eines Gemisches aus:
(a) auf das Gewicht des Gemisches bezogenen 10 bis 60% eines Acrylmonomers der Formel: 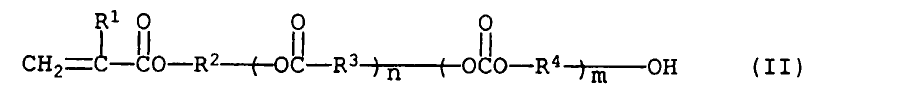 worin R¹ für Wasserstoff oder Methyl steht, R² und R³ unabhängig voneinander für eine C₂-C₈-Alkylenbrücke stehen, n für null oder eine ganze Zahl von 1 bis 6 steht, und R⁴ und m wie definiert sind;
(b) auf das Gewicht des Gemisches bezogenen 3 bis 15% eines ethylenisch ungesättigten Monomers mit einer Säuregruppe;
(c) auf das Gewicht des Gemisches bezogenen 5 bis 40% eines Monomers der Formel: 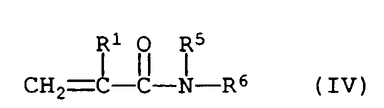 worin R¹, R⁵ und R⁶ wie definiert sind; und
(d) einem von den Monomeren (a), (b) und (c) verschiedenen, ethylenisch ungesättigten Monomer als Rest des Gemisches.

12. Hydrophiles Acrylcopolymer nach Anspruch 11, worin das Acrylmonomer (a) ein Additionsreaktionsprodukt eines Hydroxy-C₂-C₈-alkylmethacrylats mit einem cyclischen C₂-C₈-Alkylcarbonat ist.

13. Hydrophiles Acrylcopolymer nach Anspruch 12, worin das cyclische Alkylcarbonat 5,5-Dimethyl-1,3-dioxan-2-on ist.

14. Hydrophiles Acrylcopolymer nach Anspruch 10, worin das Acrylmonomer (a) ein Additionsreaktionsprodukt von 2-Hydroxyethyl(meth)acrylat-ε-caprolacton-Addukt mit einem cyclischen C₂-C₈-Alkylcarbonat ist.

15. Hydrophiles Acrylcopolymer nach Anspruch 14, worin das cyclische Alkylcarbonat 5,5-Dimethyl-1,3-dioxan-2-on ist.

16. Hydrophiles Acrylcopolymer nach Anspruch 10, worin das Säuregruppen enthaltende Monomer (b) eine polymerisierbare Alkensäure, oder ein Halbester oder -amid einer ethylenisch ungesättigten Dicarbonsäure ist.

17. Hydrophiles Acrylcopolymer nach Anspruch 10, worin das Monomer (c) (Meth)acrylamid, oder ein N-Monoalkyl- oder N,N-dialkylderivat davon ist.

18. Wärmehärtbare wässrige Beschichtungszusammensetzung, umfassend das hydrophile Acrylcopolymer aus Anspruch 1 und einen Vernetzer, der in einem eine neutralisierende Base enthaltenden wässrigen Medium dispergiert ist.

19. Beschichtungszusammensetzung nach Anspruch 18, worin der Vernetzer ein Melaminharz ist.

20. Beschichtungszusammensetzung nach Anspruch 18, worin der Vernetzer ein blockiertes Polyisocyanat ist.

21. Wärmehärtbare wässrige Beschichtungszusammensetzung, umfassend das hydrophile Acrylcopolymer aus Anspruch 9 und einen Vernetzer, der in einem eine neutralisierende Base enthaltenden wässrigen Medium dispergiert ist.

22. Beschichtungszusammensetzung nach Anspruch 21, worin der Vernetzer ein Melaminharz ist.

23. Beschichtungszusammensetzung nach Anspruch 21, worin der Vernetzer ein blockiertes Polyisocyanat ist.

## Revendications

1. Copolymère acrylique hydrophile ayant un indice d'hydroxyle de 20 à 300, un indice d'acide de 10 à 100 et un poids moléculaire moyen en nombre de 1000 à 50 000, ledit copolymère portant dans sa molécule (a) plusieurs groupes latéraux chacun terminé par une unité de formule : 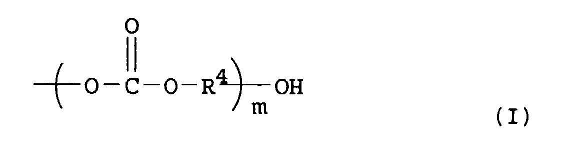 dans laquelle R⁴ est un pont alkylène en C₂ à C₈, et m est un entier de 1 à 6; et (b) plusieurs groupes latéraux terminés par un groupe acide.

2. Copolymère acrylique hydrophile selon la revendication 1, dans lequel ledit indice d'hydroxyle, ledit indice d'acide et ledit poids moléculaire sont respectivement de 50 à 200, de 30 à 80 et de 1500 à 30 000.

3. Copolymère acrylique/hydrophile selon la revendication 1 obtenu par copolymérisation d'un mélange de :
(a) 10 à 60 % en poids du mélange d'un monomère acrylique de formule : 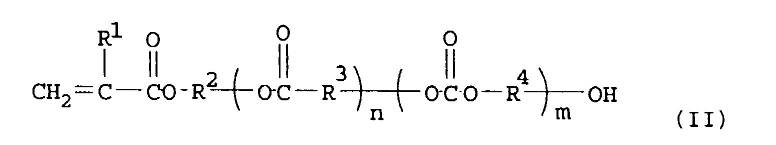 dans laquelle R¹ est un atome d'hydrogène ou un groupe méthyle, R² et R³ représentent indépendamment un pont alkylène en C₂ à C₈, n représente 0 ou un entier de 1 à 6, et R⁴ et m sont tels que définis;
(b) 3 à 15 % en poids du mélange d'un monomère éthyléniquement insaturé ayant un groupe acide; et
(c) le complément du mélange en un monomère éthyléniquement insaturé autre que les monomères (a) et (b).

4. Copolymère acrylique hydrophile selon la revendication 3, dans lequel ledit monomère acrylique (a) est un produit de réaction d'addition d'un méthacrylate hydroxyalkyle en C2 à C8 avec un alkylcarbonate en C₂ à C₈ cyclique.

5. Copolymère acrylique hydrophile selon la revendication 4, dans lequel ledit alkylcarbonate cyclique est la 5,5-diméthyl-1,3-dioxan-2-one.

6. Copolymère acrylique hydrophile selon la revendication 3, dans lequel ledit monomère acrylique (a) est un produit de réaction d'addition entre le produit d'addition du (méth)acrylate de 2-hydroxyéthyle et l'ε-caprolactone et un alkylcarbonate en C₂ à C₈ cyclique.

7. Copolymère acrylique hydrophile selon la revendication 6, dans lequel ledit alkylcarbonate cyclique est la 5,5-diméthyl-1,3-dioxan-2-one.

8. Copolymère acrylique hydrophile selon la revendication 3, dans lequel ledit monomère (b) contenant un groupe acide est un acide alcénoique polymérisable, ou un semi-ester ou un semi-amide d'un acide dicarboxylique éthyléniquement insaturé.

9. Copolymère acrylique hydrophile ayant un indice d'hydroxyle de 20 à 300, un indice d'acide de 10 à 100 et un poids moléculaire moyen en nombre de 1000 à 50 000, ledit copolymère portant dans sa molécule (a) plusieurs groupes latéraux chacun terminé par une unité de formule : 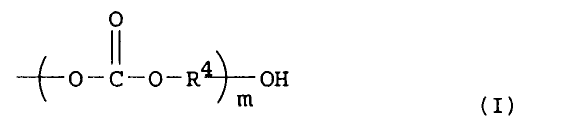 dans laquelle R⁴ est un pont alkylène en C₂ à C₈, et m est un entier entre 1 et 6; (b) plusieurs groupes latéraux à terminaison acide; et (c) plusieurs groupes latéraux chacun terminé par un groupe amide de formule : 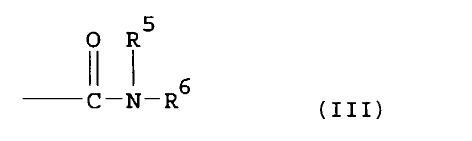 dans laquelle R⁵ et R⁶ représentent indépendamment un atome d'hydrogène, un groupe alkyle en C₁ à C₈, cycloalkyle en C₆ à C₁₂ ou aryle en C₆ à C₁₂.

10. Copolymère acrylique hydrophile selon la revendication 9, dans lequel ledit indice d'hydroxyle, ledit indice d'acide et ledit poids moléculaire sont respectivement de 50 à 200, de 30 à 80 et de 1500 à 30 000.

11. Copolymère acrylique hydrophile selon la revendication 9 obtenu par copolymérisation d'un mélange de :
(a) 10 à 60 % en poids du mélange d'un monomère acrylique de formule : 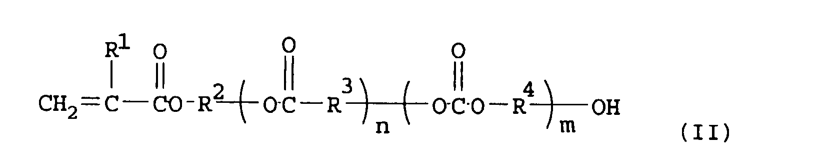 dans laquelle R¹ est un atome d'hydrogène ou un groupe méthyle, R² et R³ représentent indépendamment un pont alkylène en C₂ à C₈, n représente 0 ou un entier de 1 à 6, et R⁴ et m sont tels que définis;
(b) 3 à 15 % en poids du mélange d'un monomère éthyléniquement insaturé ayant un groupe acide;
(c) 5 à 40 % en poids du mélange d'un monomère de formule : 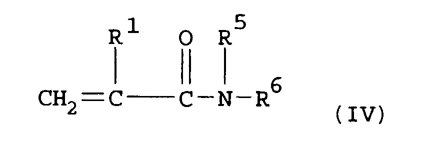 dans laquelle R¹, R⁵ et R⁶ sont tels que définis, et
(d) le complément du mélange en un monomère éthyléniquement insaturé autre que les monomères (a), (b) et (c).

12. Copolymère acrylique hydrophile selon la revendication 11, dans lequel ledit monomère acrylique (a) est un produit de réaction d'addition d'un méthacrylate hydroxyalkyle en C₂ à C₈ avec un alkylcarbonate en C₂ à C₈ cyclique.

13. Copolymère acrylique hydrophile selon la revendication 12, dans lequel ledit alkylcarbonate cyclique est la 5,5-diméthyl-1,3-dioxan-2-one.

14. Copolymère acrylique hydrophile selon la revendication 10, dans lequel ledit monomère acrylique (a) est un produit de réaction d'addition entre le produit d'addition du (méth)acrylate de 2-hydroxyéthyle et l'ε-caprolactone et un alkylcarbonate en C₂ à C₈ cyclique.

15. Copolymère acrylique hydrophile selon la revendication 14, dans lequel ledit alkylcarbonate cyclique est la 5,5-diméthyl-1,3-dioxan-2-one.

16. Copolymère acrylique hydrophile selon la revendication 10, dans lequel ledit monomère (b) contenant un groupe acide est un acide alcénoïque polymérisable, ou un semi-ester ou un semi-amide d'un acide dicarboxylique éthyléniquement insaturé.

17. Copolymère acrylique hydrophile selon la revendication 10, dans lequel ledit monomère (c) est un (méth)acrylamide, ou un dérivé N-monoalkylique ou N,N-dialkylique de celui-ci.

18. Composition aqueuse de revêtement thermodurcissable comprenant le copolymère acrylique hydrophile selon la revendication 1 et un agent réticulant dispersé dans un milieu aqueux contenant une base neutralisante.

19. Composition de revêtement selon la revendication 18, dans laquelle ledit agent réticulant est une résine de mélamine.

20. Composition de revêtement selon la revendication 18, dans laquelle ledit agent réticulant est un polyisocyanate bloqué.

21. Composition aqueuse de revêtement thermodurcissable comprenant le copolymère acrylique hydrophile selon la revendication 9 et un agent réticulant dispersé dans un milieu aqueux contenant une base neutralisante.

22. Composition de revêtement selon la revendication 21 dans laquelle ledit agent réticulant est une résine de mélamine.

23. Composition de revêtement selon la revendication 21, dans laquelle ledit agent réticulant est un polyisocyanate bloqué.
